(19) Europäisches Patentamt
European Patent Office
Office européen des brevets

(11) **EP 4 004 356 B1**

(12) **FASCICULE DE BREVET EUROPEEN**

(45) Date de publication et mention
de la délivrance du brevet:
**30.08.2023 Bulletin 2023/35**

(21) Numéro de dépôt: **20756912.0**

(22) Date de dépôt: **23.07.2020**

(51) Classification Internationale des Brevets (IPC):
*F02C 7/32* *(2006.01)*

(52) Classification Coopérative des Brevets (CPC):
**F02C 7/32;** F05D 2220/323; F05D 2220/7644;
F05D 2260/40311; F05D 2270/04; Y02T 50/60

(86) Numéro de dépôt international:
**PCT/FR2020/051353**

(87) Numéro de publication internationale:
**WO 2021/019163 (04.02.2021 Gazette 2021/05)**

(54) **DISPOSITIF D'ENTRAINEMENT D'UNE GÉNÉRATRICE D'UNE TURBOMACHINE D'AÉRONEF ET PROCÉDÉ DE RÉGULATION DE LA VITESSE D'UNE TELLE GÉNÉRATRICE**

VORRICHTUNG ZUM ANTRIEB EINES GENERATORS EINER FLUGZEUGTURBOMASCHINE UND VERFAHREN ZUR REGELUNG DER DREHZAHL EINES SOLCHEN GENERATORS

DEVICE FOR DRIVING A GENERATOR OF AN AIRCRAFT TURBOMACHINE AND METHOD FOR REGULATING THE SPEED OF SUCH A GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2019 FR 1908553**

(43) Date de publication de la demande:
**01.06.2022 Bulletin 2022/22**

(73) Titulaire: **SAFRAN AIRCRAFT ENGINES**
**75015 Paris (FR)**

(72) Inventeur: **DE WERGIFOSSE, Huguette**
**77550 MOISSY-CRAMAYEL (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**EP-A1- 2 696 058     EP-A2- 2 216 530**
**EP-B1- 2 216 530     FR-A1- 3 062 421**

**Description**

**Domaine technique de l'invention**

L'invention se rapporte au domaine des turbomachines, et plus précisément à un dispositif d'entrainement d'une génératrice intégrée d'une turbomachine à partir d'un boîtier de relais d'accessoires de la turbomachine. L'invention concerne également un procédé de régulation de la vitesse de la génératrice intégrée de la turbomachine.

**Arrière-plan technique**

L'arrière-plan technique comprend notamment les documents FR3062421A1, EP2216530A2, EP2216530A3 et EP2696058A1.

De façon connue, une turbomachine installée sur un aéronef est équipée d'une génératrice intégrée (également connue sous l'acronyme !DG de l'expression anglaise « Integrated Drive Generator ») configurée pour délivrer une puissance électrique à une fréquence constante, par exemple une puissance électrique de 115 V en courant alternatif triphasé à 400 Hz.

La génératrice est conçue pour recevoir de l'énergie mécanique par la rotation de son arbre d'entrée à différentes vitesses de rotation, et pour transformer cette énergie mécanique en énergie électrique. En général, la génératrice est entraînée par un arbre de sortie d'un boîtier de relais d'accessoires (également connu sous l'acronyme AGB de l'expression anglaise « Accessory Gear Box ») de la turbomachine. La vitesse de rotation de l'arbre d'entrée de la génératrice et la vitesse de sortie du boîtier de relais d'accessoires sont donc liées par un rapport de réduction fixe aux vitesses variables de la turbomachine. Pour obtenir une fréquence constante, la génératrice doit être entraînée à une vitesse constante.

Pour cela, un dispositif de commande de la vitesse entre l'arbre de sortie du boîtier de relais d'accessoires et l'arbre d'entrée de la génératrice peut être installé, afin de maintenir une vitesse constante de l'axe de rotation de la génératrice.

En particulier, une génératrice délivrant une puissance électrique à une fréquence constante est traditionnellement équipée d'un dispositif hydromécanique à différentiel pour assurer un réglage de la vitesse constante de la génératrice.

Le dispositif de commande de la vitesse est généralement constitué d'un moteur hydraulique à cylindrée fixe. La vitesse du moteur hydraulique est pilotée par une boucle de régulation en pression. Le transfert de la puissance hydraulique est réalisé par un moteur hydraulique à cylindrée variable, où la cylindrée est ajustée pour assurer la conservation de débit entre les deux équipements. Pour la régulation en pression, le système hydraulique est équipé d'un régulateur en pression dissipatif.

Toutefois, la puissance mécanique prélevée sur le boîtier de relais d'accessoires n'est pas égale à la puissance délivrée par la génératrice.

De plus, le dispositif hydromécanique présente des inconvénients. En particulier, le rendement global du moteur hydraulique à cylindrée fixe ou variable est faible, et notamment proche de 80%, du fait de fuites internes et de frottements. De plus, il y a des pertes de charges au niveau du dispositif hydraulique pilotant le moteur hydraulique à cylindrée variable et des pertes dissipatives au niveau du régulateur de pression pilotant la vitesse du moteur hydraulique à cylindrée fixe. En outre, le fonctionnement réversible dans les deux quadrants (vitesse positive et négative, moteur/générateur) ne permet pas une optimisation en terme de rendement, et de ce fait, le rendement est inférieur à 80%. Ce dispositif hydromécanique est également peu fiable car l'ajustement de la vitesse de la génératrice implique un fonctionnement des moteurs hydrauliques dans une large gamme de vitesse. Ainsi, à basse vitesse ou à haute vitesse, les rendements sont affectés et le risque d'usure est plus important.

L'invention a pour objectif de proposer une solution permettant de remédier à au moins certains de ces inconvénients.

**Résumé de l'invention**

A cet effet, l'invention concerne un dispositif d'entrainement d'un arbre d'entrée d'une génératrice intégrée d'une turbomachine d'aéronef à partir d'un arbre de sortie d'un boîtier de relais d'accessoires de la turbomachine, caractérisé en ce que le dispositif d'entrainement comprend :

- des premier et deuxième moteurs électriques,
- des moyens de commande configurés pour commander lesdits premier et deuxième moteurs électriques, lesdits premier et deuxième moteurs électriques étant agencés pour transférer de la puissance électrique de l'un à l'autre, et
- un réducteur à train épicycloïdal comprenant trois éléments, un planétaire central, une couronne externe et un porte-satellites dont les satellites s'engrènent avec ledit planétaire et ladite couronne, lesdits trois éléments étant mobiles en rotation autour d'un axe du réducteur, un premier desdits trois éléments étant destiné à être couplé à l'arbre de sortie du boîtier de relais d'accessoires, un deuxième desdits trois éléments étant destiné à être couplé à l'arbre d'entrée de la génératrice, un troisième desdits trois éléments étant entraîné en rotation par ledit premier moteur électrique,

et dans lequel lesdits moyens de commande sont configurés pour modifier la vitesse de rotation du troisième desdits trois éléments de manière à ce que le deuxième desdits trois éléments soit entraîné en rotation à une vitesse constante.

La vitesse de rotation de l'arbre d'entrée de la génératrice intégrée étant généralement variable, afin d'ajuster la vitesse de sortie de la génératrice à une valeur constante, le dispositif d'entrainement comporte un réducteur à train épicycloïdal pour intégrer un degré d'adaptation supplémentaire. La transmission par le réducteur à train épicycloïdal permet de relier l'axe entraîné par le boîtier de relais d'accessoires, à la génératrice et au premier moteur électrique, et ainsi d'ajuster la vitesse de la génératrice à une valeur constante. Le réducteur à train épicycloïdal se comporte comme un différentiel, et permet de lier ces trois équipements et de moduler la vitesse de l'arbre d'entrée de la génératrice.

Ainsi, le pilotage de la vitesse du premier moteur électrique permet d'assurer une vitesse constante de sortie de la génératrice pour une vitesse d'entrée du côté du boîtier de relais d'accessoires.

Le deuxième moteur électrique permet d'assurer le transfert de puissance électrique avec le premier moteur électrique.

Le dispositif d'entrainement selon l'invention est avantageusement purement électrique et incorpore un transfert de puissance électrique entre les premier et deuxième moteurs électriques, ce qui permet de supprimer les pertes dissipatives présentes dans les dispositifs d'entrainement selon l'art antérieur.

La vitesse de sortie de la génératrice est avantageusement maintenue constante sans prélèvement de puissance additionnelle à l'arbre de sortie du boîtier de relais d'accessoires de la turbomachine. Ainsi, la puissance prélevée à l'arbre de sortie du boîtier de relais d'accessoires est intégralement transformée en puissance électrique.

Le dispositif d'entrainement selon l'invention permet de travailler dans les deux quadrants, sans pénalisation en termes de rendement des moteurs électriques.

De plus, le dispositif d'entrainement est fiable, notamment grâce à la redondance des moteurs électriques, contrairement aux dispositifs selon l'art antérieur dans lesquels redondance hydraulique n'est pas concevable techniquement.

En outre, le nombre de composants du dispositif est limité, le dispositif d'entrainement ne comprenant pas de dispositif de régulateur de pression, ni de dispositif de régulateur de cylindrée comme dans l'art antérieur.

Le premier moteur électrique peut être un moteur/générateur apte à fonctionner sans transfert de puissance avec un second moteur. En particulier, le premier moteur électrique peut être équipé d'une batterie.

De préférence, les premier et deuxième moteurs électriques sont asynchrones.

Le dispositif d'entrainement peut comprendre au moins un convertisseur de puissance réversible agencé entre les premier et deuxième moteurs électriques de manière à transférer de la puissance électrique de manière réversible de l'un à l'autre.

Selon un premier mode de réalisation, le premier des trois éléments est le porte-satellites accouplé au boîtier de relais d'accessoires (i.e. à l'AGB), le deuxième desdits trois éléments est la couronne accouplée à la génératrice, et le troisième desdits trois éléments est le planétaire accouplé au premier moteur électrique. Dans cette configuration, le deuxième desdits trois éléments peut également être couplé au deuxième moteur électrique.

Selon un deuxième mode de réalisation, le premier des trois éléments est le porte-satellites accouplé au boîtier de relais d'accessoires (i.e. à l'AGB), le deuxième desdits trois éléments est la couronne accouplée à la génératrice, et le troisième desdits trois éléments est le planétaire accouplé au premier moteur électrique. Dans cette configuration, le premier desdits trois éléments peut également être couplé au deuxième moteur électrique.

Selon un troisième mode de réalisation, le premier des trois éléments est la couronne accouplée au boîtier de relais d'accessoires (i.e. à l'AGB), le deuxième desdits trois éléments est le porte-satellites accouplé à la génératrice, et le troisième desdits trois éléments est le planétaire accouplé au premier moteur électrique. Dans cette configuration, le premier desdits trois éléments peut également être couplé au deuxième moteur électrique.

L'invention concerne également une turbomachine, notamment d'aéronef, comportant :

- un boîtier de relais d'accessoires ayant un arbre de sortie,
- une génératrice intégrée ayant un arbre d'entrée,

et étant caractérisée en ce qu'elle comporte également un dispositif d'entrainement selon l'invention.

L'invention concerne également un procédé de régulation de la vitesse d'une génératrice intégrée d'une turbomachine selon l'invention dans un aéronef, comprenant une étape de modification de la vitesse du troisième des trois éléments en pilotant le premier moteur électrique au moyen des moyens de commande de manière à ce que le deuxième desdits trois éléments soit entraîné en rotation à une vitesse constante.

**Brève description des figures**

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

[Fig. 1] la figure 1 représente très schématiquement une première configuration cinématique d'un dispositif d'entrainement d'une turbomachine selon l'invention ;
[Fig. 2] la figure 2 représente très schématiquement une deuxième configuration cinématique d'un dispositif d'entrainement d'une turbomachine selon l'invention ;
[Fig. 3] la figure 3 représente très schématiquement une troisième configuration cinématique d'un dispositif d'entrainement d'une turbomachine selon l'invention ; et
[Fig. 4a-4c] les figures 4a, 4b et 4c représentent des vues en éclaté et un schéma d'un réducteur à train épicycloïdal d'un dispositif d'entrainement selon l'invention. Les éléments ayant les mêmes fonctions dans les différentes mises en oeuvre ont les mêmes références dans les figures.

**Description détaillée de l'invention**

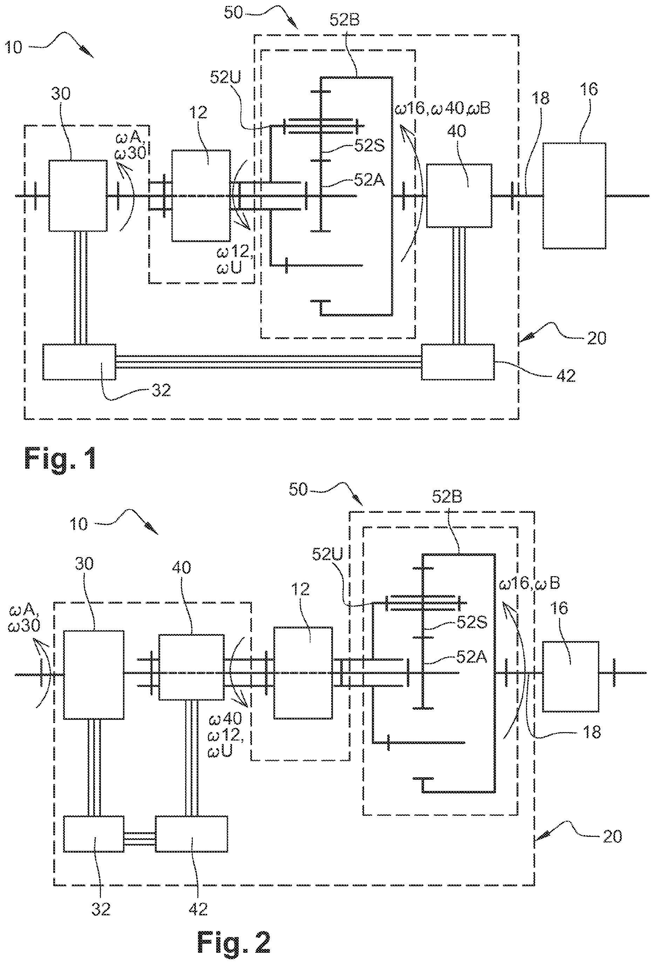

Les figures 1 à 3 représentent une turbomachine 10, comprenant un dispositif d'entrainement 20 selon l'invention.

La turbomachine 10 comporte un boîtier de relais d'accessoires 12 qui est configuré pour être entraîné par un axe moteur. Le boîtier de relais d'accessoires 12 peut comporter plusieurs trains d'engrenages reliés à des arbres de sortie pour entraîner divers équipements. Ici, un des arbres de sortie 14 du boîtier d'engrenages entraîne, par le dispositif d'entraînement 20, une génératrice intégrée 16.

La turbomachine 10 comporte également la génératrice intégrée 16. La génératrice 16 permet de convertir l'énergie mécanique due à la rotation de son arbre d'entrée 18 en une énergie électrique.

Le dispositif d'entrainement 20 comprend un premier moteur électrique 30, et des moyens de commande configurés pour commander le premier moteur électrique 30. Le premier moteur électrique 30 peut être un moteur/générateur. Autrement dit, le premier moteur électrique 30 peut être configuré pour fonctionner en mode générateur en fournissant de l'énergie électrique et pour fonctionner en mode moteur en récupérant de l'énergie électrique. En particulier, le premier moteur électrique 30 peut être équipé d'une batterie.

Le dispositif d'entrainement 20 comprend un deuxième moteur électrique 40, et des moyens de commande configurés pour commander le deuxième moteur électrique 40. Le deuxième moteur électrique 40 peut être un moteur/générateur. Les premier et deuxième moteurs électriques 30, 40 sont agencés pour transférer de la puissance électrique de l'un à l'autre.

De préférence, les premier et deuxième moteurs électriques 30, 40, sont asynchrones en courant alternatif.

Le dispositif d'entrainement 20 peut comprendre des convertisseurs de puissance 32, 42 réversibles agencés entre les premier et deuxième moteurs électriques 30, 40 de manière à transférer de la puissance électrique de manière réversible de l'un à l'autre. Plus précisément, le premier moteur électrique 30 est relié à un premier convertisseur de puissance 32, et le deuxième moteur électrique 40 est relié à un deuxième convertisseur de puissance 42, et les premier et deuxième convertisseurs de puissance 32, 42 sont connectés ensemble. Un convertisseur de puissance peut être un onduleur ou un redresseur.

Le dispositif d'entrainement 20 comprend également un réducteur à train épicycloïdal 50. Les propriétés du réducteur à train épicycloïdal sont utilisées pour adapter la vitesse de rotation de l'arbre d'entrée 18 de la génératrice 16.

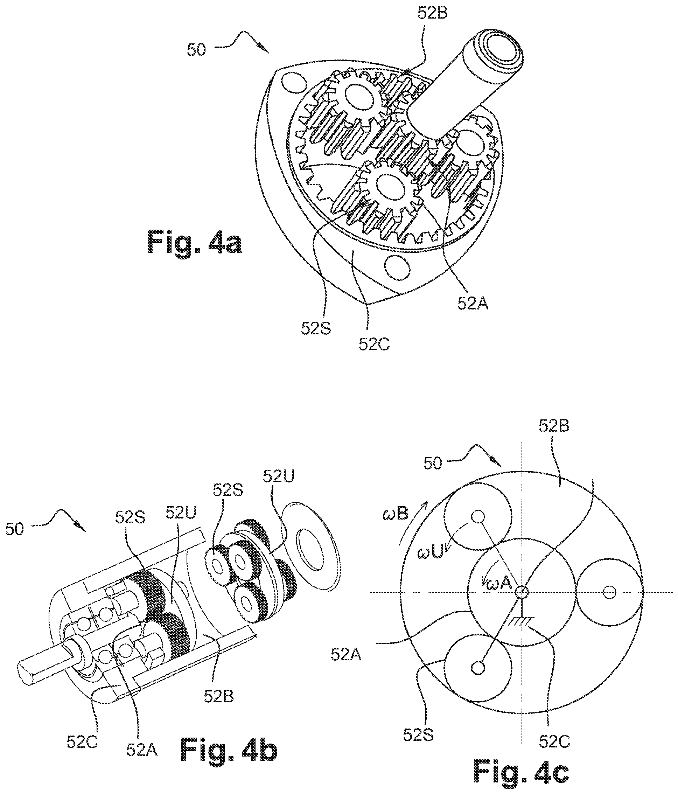

Les figures 4a, 4b et 4c représentent un réducteur à train épicycloïdal 50.

Le réducteur à train épicycloïdal 50 comporte un planétaire central 52A, agencé pour pouvoir tourner autour de l'axe du réducteur à une vitesse de rotation, notée $\omega$A, et un porte-satellites 52U agencé pour pouvoir tourner autour de l'axe du réducteur à une vitesse de rotation, notée $\omega$U.

Le réducteur à train épicycloïdal 50 comporte également des satellites 52S qui s'engrènent avec le planétaire central 52A et qui sont portés par un porte-satellites 52U.

Le réducteur à train épicycloïdal 50 comporte également une couronne 52B externe agencée pour pouvoir tourner autour de l'axe du réducteur à une vitesse de rotation, notée $\omega$B, et avec laquelle les satellites 52S s'engrènent également.

Dans le réducteur à train épicycloïdal 50, les trois éléments, à savoir le planétaire central 52A, le porte-satellites 52U et la couronne 52B, sont mobiles en rotation autour de l'axe du réducteur. Par exemple, la couronne 52B est libre de tourner à l'intérieur d'un carter fixe 52C qui est configuré pour protéger le réducteur 50.

Le fonctionnement du réducteur à train épicycloïdal 50 est régi par la formule de Willis. Il s'agit d'un mécanisme à deux degrés de liberté, dans lequel la connaissance des vitesses de rotation de deux éléments parmi le planétaire central 52A, le porte-satellites 52U et la couronne 52B, permet le calcul de la vitesse de rotation du troisième élément.

La formule de Willis s'exprime par les équations suivantes :

[Math 1]

$$\frac{\omega A - \omega U}{\omega B - \omega U} = k$$

ou

[Math 2]

$$\omega A - k \times \omega B + (k-1) \times \omega U = 0$$

avec ωA la vitesse de rotation du planétaire central 52A, ωU la vitesse de rotation du porte-satellites 52U, ωB la vitesse de rotation de la couronne 52B, et le facteur k, également appelé raison, une constante déterminée par la géométrie des engrenages.

Pour le réducteur de la figure 4, le facteur k respecte l'équation suivante :

[Math 3]

$$k = -\frac{ZB}{ZA}$$

avec ZA le nombre de dents du planétaire central 52A et ZB le nombre de dents de la couronne 52B. Le facteur k est donc négatif avec un module inférieur à 1.

L'arbre de sortie 14 du boîtier de relais d'accessoires 12 est couplé à l'un des trois éléments du réducteur 50, l'arbre d'entrée 18 de la génératrice 16 est couplé à un deuxième élément du réducteur 50, et le premier moteur électrique 30 est couplé au troisième élément du réducteur 50 pour piloter la vitesse de rotation de ce dernier.

Selon l'invention, les moyens de commande sont configurés pour modifier la vitesse de rotation du troisième élément, c'est-à-dire la vitesse de rotation ω30 du premier moteur électrique 30, de manière à ce que le deuxième élément, c'est-à-dire la génératrice 16, soit entraîné en rotation à une vitesse constante.

Afin d'obtenir une vitesse de rotation constante de l'arbre d'entrée 18 de la génératrice 16 pour une vitesse de rotation donnée de l'arbre de sortie 14 du boîtier de relais d'accessoires 12, il est possible de faire varier la vitesse de rotation du troisième élément du réducteur 50.

Six combinaisons cinématiques sont possibles pour positionner les trois équipements, à savoir le boîtier de relais d'accessoires 12, la génératrice 16 et le premier moteur électrique 30, par rapport aux trois éléments du réducteur à train épicycloïdal 50.

Le deuxième moteur électrique 40 est également couplé à l'un des éléments du réducteur 50 qui n'est pas couplé au premier moteur électrique 30. Le deuxième moteur électrique 40 peut être positionné sur l'axe de la génératrice 16 ou sur l'axe du boîtier de relais d'accessoires.

Le premier moteur électrique 30 et le deuxième moteur électrique 40 comportent chacun un stator et un rotor. Les premier et deuxième moteurs électriques 30, 40 sont pilotables en couple appliqué sur leur rotor et en vitesse de rotation ω30, ω40 de leur rotor. Le couple et la vitesse de chaque moteur électrique 30, 40 sont alors pilotés par la puissance électrique et la fréquence du courant envoyé par les convertisseurs de puissance 32, 42 dédié à chacun.

Par ailleurs, le deuxième moteur électrique 40 est électriquement lié au premier moteur électrique 30 par l'intermédiaire des convertisseurs de puissance réversibles 32, 42 afin de faire passer de la puissance de l'un à l'autre.

La position du deuxième moteur électrique 40 multiplie par deux le nombre de combinaisons possibles pour le dispositif d'entrainement 20. On obtient ainsi douze combinaisons répertoriées dans le tableau ci-dessous.

Le tableau 1 indique également la fonction donnant la vitesse de rotation ω16 de la génératrice 16 à partir de la vitesse de rotation ω12 de l'arbre de sortie 14 du boîtier de relais d'accessoires 12 et de la vitesse de rotation ω30 du premier moteur électrique 30. La vitesse de rotation ω40 du deuxième moteur électrique 40 est déterminée par la vitesse de rotation de l'équipement avec lequel il est couplé en série sur le réducteur 50, soit l'arbre de la génératrice 16, soit l'arbre de sortie 14 du boîtier de relais d'accessoires 12. Dans ce tableau, l'option 1 correspond aux cas où le deuxième moteur électrique 40 est couplé en série avec la génératrice 16 sur le même élément du réducteur 50, et l'option 2 correspond aux cas où le deuxième moteur électrique 40 est couplé en série avec l'arbre de sortie du boîtier de relais d'accessoires 12 sur le même élément du réducteur 50.

[Tableau 1]

| Liaison boîtier de relais d'accessoires/génératrice/premier moteur électrique | | | Vitesse génératrice | Liaison deuxième moteur électrique | |
|---|---|---|---|---|---|
| Boîtier de relais d'accessoires 12 relié au porte-satellites 52U | | | | Option 1 | Option 2 |
| | Premier moteur électrique 30 | Génératrice 16 | | | |
| 1A | Couronne 528 | Planétaire 52A | $\omega 16 = (1-k) \times \omega 12 + k \times \omega 30$ | Planétaire 52A | Porte-satellites 52U |
| 1B | Planétaire 52A | Couronne 528 | $\omega 16 = -\omega 12 \times \dfrac{1-k}{k} + \dfrac{\omega 30}{k}$ | Couronne 528 | Porte-satellites 52U |
| Boîtier de relais d'accessoires 12 relié à la couronne 528 | | | | Option 1 | Option 2 |
| | Premier moteur électrique 30 | Génératrice 16 | | | |
| 2A | Porte-satellites 52U | Planétaire 52A | $\omega 16 = k \times \omega 12 + (1-k) \times \omega 30$ | Planétaire 52A | Couronne 528 |
| 28 | Planétaire 52A | Porte-satellites 52U | $\omega 16 = -\omega 12 \times \dfrac{k}{1-k} + \dfrac{\omega 30}{1-k}$ | Porte-satellites 52U | Couronne 52B |
| Boîtier de relais d'accessoires 12 relié au planétaire 52A | | | | Option 1 | Option 2 |
| | Premier moteur électrique 30 | Génératrice 16 | | | |
| 3A | Couronne 52B | Porte-satellites 52U | $\omega 16 = \dfrac{\omega 12}{1-k} - \omega 30 \times \dfrac{k}{1-k}$ | Porte-satellites 52U | Planétaire 52A |
| 3B | Porte-satellites 52U | Couronne 528 | $\omega 16 = \dfrac{\omega 12}{k} - \omega 30 \times \dfrac{1-k}{k}$ | Couronne 528 | Planétaire 52A |

Les couples délivrés par le boîtier de relais d'accessoires 12, la génératrice 16 et le premier moteur électrique 30 sont reliés par une expression d'équilibre du train.

En particulier, une étude du réducteur 50 permet d'obtenir la relation d'équilibre du train et la relation d'équilibre de puissance suivantes :

[Math 4]

$$CA + CB + CU = 0$$

[Math 5]

$$\omega A \times CA + \omega B \times CB + \omega U \times CU = 0$$

avec CA le couple s'exerçant sur le planétaire 52A CB, le couple s'exerçant sur la couronne 52B, CU le couple s'exerçant sur le porte-satellites 52U, $\omega$A la vitesse de rotation du planétaire central 52A, $\omega$B la vitesse de rotation de la couronne 52B et $\omega$U la vitesse de rotation du porte-satellites 52U.

Il en résulte un couple au niveau du premier moteur électrique 30, et donc une puissance motrice ou génératrice au niveau de ce moteur selon le sens de la vitesse et du couple.

Le deuxième moteur électrique 40 est mis en série avec la génératrice 16 ou avec le boîtier de relais d'accessoires 12, et de ce fait la vitesse de rotation $\omega$40 du deuxième moteur électrique 40 est déterminée comme étant égale à celle de cet équipement.

Ainsi, le deuxième moteur électrique 40 apporte un degré de liberté supplémentaire au dispositif d'entrainement suivant le couple qu'il exerce et qui vient s'ajouter à celui de la génératrice 16 ou du boîtier de relais d'accessoires 12 sur l'élément correspondant du réducteur 50.

Ce degré de liberté supplémentaire est utilisé pour assurer un transfert de puissance avec le premier moteur électrique 30.

En effet, sans l'ajout du deuxième moteur électrique 40 qui permet le transfert de puissance avec le premier moteur électrique 30, la puissance prélevée sur l'axe du boîtier de relais d'accessoires 12 serait dans certaines phases de vol de la turbomachine inférieure à la puissance électrique délivrée par la génératrice 16 et dans certaines phases de vol de la turbomachine supérieure aux besoins de la phase de vol.

Dans le cas d'une puissance électrique délivrée par la génératrice 16 supérieure à la puissance prélevée sur le boîtier de relais d'accessoires 12, le gain de puissance provient de la puissance électrique prélevée par le premier moteur électrique en mode moteur.

Dans le cas d'une puissance électrique délivrée par la génératrice 16 inférieure à la puissance prélevée sur le boîtier de relais d'accessoires 12, la perte de puissance est prélevée par le premier moteur électrique 30 en mode générateur.

En l'absence du second moteur électrique la batterie du premier moteur électrique 30 permettrait de récupérer de la puissance électrique pendant les phases génératrices et de restituer cette puissance électrique pendant les phases motrices. Le mode de pilotage du premier moteur électrique 30 permet son fonctionnement dans les quatre quadrants, en termes de couple et de vitesse.

L'énergie globale prélevée sur le boîtier de relais d'accessoires 12 pendant toute la phase de vol correspond alors à l'énergie électrique délivrée par la génératrice 16.

Le choix des paramètres tels que la raison k du train épicycloïdal du réducteur 50 et de la vitesse de rotation d'entrée du côté du boîtier de relais d'accessoires 12 doit être optimisé pour répondre à différentes contraintes, des contraintes de vitesse moteur, des contraintes de puissance maximale des machines électriques.

En effet, le dispositif d'entrainement 20 dépend de plusieurs paramètres dont : la raison k du train épicycloïdal du réducteur 50, le rapport de la vitesse de rotation $\omega$12 en sortie du boîtier de relais d'accessoires 12 par rapport à la vitesse de rotation de l'axe moteur de la turbomachine et la valeur maximale de la vitesse de rotation $\omega$16 de la génératrice 16.

Un choix parmi les douze configurations doit être fait en optimisant ces paramètres pour atteindre en particulier les objectifs suivants :

- avoir une vitesse de la génératrice 16 supérieure à la vitesse du boîtier de relais d'accessoires 12 ;
- réduire le couple du premier moteur électrique 30 pour l'optimisation de la taille du moteur ;
- avoir la vitesse du premier moteur électrique 30 la plus élevée possible ;
- avoir la vitesse du deuxième moteur électrique 40 la plus élevée possible ;
- optimiser les transferts de puissance entre le premier moteur électrique 30 et le deuxième moteur électrique 40.

Toutes les combinaisons du tableau 1 ne permettent pas forcément d'atteindre ces objectifs.

Une étude particulière d'optimisation de chaque combinaison est donc nécessaire pour motiver un choix de mise en oeuvre sur une turbomachine. Les combinaisons décrites ci-dessous présentent divers avantages à considérer pour une intégration dans une turbomachine.

La figure 1 illustre la configuration « 1B-Option 1 » dans laquelle le boîtier de relais d'accessoires 12 est relié au porte-satellites 52U, la génératrice 16 est reliée à la couronne 52B et le premier moteur électrique 30 est relié au planétaire central 52A. Dans cette configuration, le deuxième moteur électrique 40 est relié à la couronne 52B.

Cette configuration permet de répondre aux contraintes suivantes :

- vitesse de rotation $\omega$16 de la génératrice 16 supérieure à la vitesse de rotation $\omega$12 du boîtier de relais d'accessoires 12, notamment grâce à la liaison de la génératrice 16 à la couronne 52B ;
- réduction du couple du premier moteur électrique 30 pour l'optimisation de la taille du moteur, notamment grâce à la liaison du premier moteur électrique 30 sur le planétaire 52A ;

- vitesse de rotation ω30 du premier moteur électrique 30 la plus élevée possible, notamment grâce à la liaison du premier moteur électrique 30 sur le planétaire 52A ; et
- vitesse de rotation ω40 du deuxième moteur électrique 40 la plus élevée possible, notamment grâce à la liaison du deuxième moteur électrique 40 sur le couronne 52B.

Dans cette configuration, le pilotage du deuxième moteur électrique 40 est limité à une boucle de commande en couple, car sa vitesse est constante, le deuxième moteur électrique 40 et la génératrice 16 étant reliés au même élément du réducteur 50.

La figure 2 illustre la configuration « 1B-Option 2 » dans laquelle le boîtier de relais d'accessoires 12 est relié au porte-satellites 52U, la génératrice 16 est reliée à la couronne 52B et le premier moteur électrique 30 est relié au planétaire central 52A. Dans cette configuration, le deuxième moteur électrique 40 est relié au porte-satellites 52U.

Cette configuration permet de répondre aux contraintes suivantes :

- vitesse de rotation ω16 de la génératrice 16 supérieure à la vitesse de rotation ω12 du boîtier de relais d'accessoires ;
- réduction du couple du premier moteur électrique 30 pour l'optimisation de la taille du moteur; et
- vitesse de rotation ω30 du premier moteur électrique 30 la plus élevée possible.

Dans cette configuration, le pilotage du deuxième moteur électrique 40 comprend une boucle de commande en couple et vitesse, le deuxième moteur électrique 40 et le boîtier de relais d'accessoires 12 étant reliés au même élément du réducteur 50.

Le choix du positionnement du deuxième moteur électrique 40 sur l'axe de la génératrice 16 (configuration « 1B-Option 1 ») ou sur l'axe du boîtier de relais d'accessoires 12 (configuration « 1B-Option 2 ») dépend de l'application, et principalement de l'agencement et de l'encombrement des équipements, et de la vitesse maximale de la turbomachine 10 et de la vitesse maximale de la génératrice 16 qui est délimitée par le couple maximal, et donc par la puissance maximale.

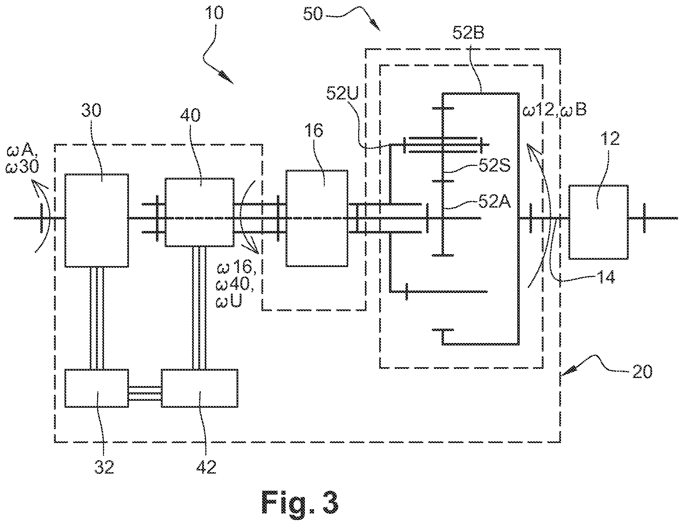

La figure 3 illustre la configuration « 2B-Option 1 » dans laquelle le boîtier de relais d'accessoires 12 est relié à la couronne 52B, la génératrice 16 est reliée au porte-satellites 52U et le premier moteur électrique 30 est relié au planétaire central 52A. Dans cette configuration, le deuxième moteur électrique 40 est relié au porte-satellites 52U.

Le choix de la configuration dépend des niveaux de puissance de l'application considérée.

Les configurations 1A et 1B, indépendamment de l'Option, permettent de répondre à la majorité des applications et aux différentes contraintes majeures.

Dans la configuration 1B, Option 1 ou Option 2, l'absence de perte provient du transfert de puissance électrique. En effet, le premier moteur électrique 30 peut récupérer de l'énergie en mode générateur au travers du réducteur à train épicycloïdal 50 et la restituer au deuxième moteur électrique 40, ou alors récupérer de l'énergie du deuxième moteur électrique 40 et la restituer en mode moteur au réducteur à train épicycloïdal 50.

En fonctionnement le réducteur à train épicycloïdal 50 se comporte de trois façons différentes.

Premièrement, si la vitesse de l'arbre 14 du boîtier de relais d'accessoires 12 est telle que la vitesse de la génératrice 16 correspond à la valeur de la vitesse constante, la vitesse de pilotage du premier moteur électrique 30 est nulle et la vitesse de la génératrice 16 est reliée à la vitesse de l'arbre 14 du boîtier de relais d'accessoires 12 par le rapport de réduction du train épicycloïdal à vitesse du premier moteur électrique 30 nulle.

Deuxièmement, si la vitesse de l'arbre 14 du boîtier de relais d'accessoires 12 est telle que la vitesse de la génératrice 16 est supérieure à la valeur de la vitesse constante, le premier moteur électrique 30 est piloté pour fonctionner dans un certain sens de rotation en mode générateur pour réduire la vitesse de la génératrice 16. L'énergie récupérée est alors restituée au deuxième moteur électrique 40 fonctionnant en mode moteur.

Troisièmement, si la vitesse de l'arbre 14 du boîtier de relais d'accessoires 12 est telle que la vitesse de la génératrice 16 est inférieure aux besoins de la turbomachine 10, le premier moteur électrique 30 est piloté pour fonctionner dans l'autre sens de rotation en mode moteur pour augmenter la vitesse de la génératrice 16. L'énergie restituée au premier moteur électrique 30 provient de l'énergie récupérée du deuxième moteur électrique 40 fonctionnant en mode générateur.

La puissance prélevée au boîtier de relais d'accessoires 12 est transformée intégralement en puissance délivrée par la génératrice 16.

Suivant le concept et la technologie des moteurs, de préférence de type asynchrone, la redondance des moteurs afin de garantir une fiabilité élevée n'a qu'un faible impact sur la taille des moteurs.

L'invention concerne également un procédé de régulation de la vitesse d'une génératrice intégrée 16 d'une turbomachine 10 telle que décrite précédemment.

Le procédé comprend une étape de modification de la vitesse du troisième des trois éléments en pilotant le premier moteur électrique 30 au moyen des moyens de commande de manière à ce que le deuxième desdits trois éléments, c'est-à-dire la génératrice 16, soit entraîné en rotation à une vitesse constante.

En particulier, la vitesse du premier moteur électrique 30 est adaptée à la vitesse de l'arbre de sortie du boîtier de relais d'accessoires 12 pour que la vitesse de la génératrice 16 soit constante.

**Revendications**

1.  Dispositif d'entrainement (20) d'un arbre d'entrée (18) d'une génératrice intégrée (16) d'une turbomachine (10) d'aéronef à partir d'un arbre (14) de sortie d'un boîtier de relais d'accessoires (12) de la turbomachine (10), **caractérisé en ce que** le dispositif d'entrainement (20) comprend :

    - des premier et deuxième moteurs électriques (30, 40) étant chacun un moteur/générateur,
    - des moyens de commande configurés pour commander lesdits premier et deuxième moteurs électriques (30, 40), lesdits premier et deuxième moteurs électriques (30, 40) étant agencés pour transférer de la puissance électrique de l'un à l'autre, et
    - un réducteur à train épicycloïdal (50) comprenant trois éléments, un planétaire (52A) central, une couronne (52B) externe et un porte-satellites (52U) dont les satellites (52S) s'engrènent avec ledit planétaire (52A) et ladite couronne (52B), lesdits trois éléments étant mobiles en rotation autour d'un axe du réducteur (50), un premier desdits trois éléments étant destiné à être couplé à l'arbre de sortie (14) du boîtier de relais d'accessoires (12), un deuxième desdits trois éléments étant destiné à être couplé à l'arbre d'entrée (18) de la génératrice (16), un troisième desdits trois éléments étant entraîné en rotation par ledit premier moteur électrique (30),

    et dans lequel lesdits moyens de commande sont configurés pour modifier la vitesse de rotation du troisième desdits trois éléments de manière à ce que le deuxième desdits trois éléments soit entraîné en rotation à une vitesse constante.

2.  Dispositif d'entrainement (20) selon la revendication précédente, dans lequel le premier moteur électrique (30) est un moteur/générateur équipé d'une batterie.

3.  Dispositif d'entrainement (20) selon l'une des revendications précédentes, dans lequel lesdits premier et deuxième moteurs électriques (30, 40) sont asynchrones.

4.  Dispositif d'entrainement (20) selon l'une des revendications précédentes, comprenant au moins un convertisseur de puissance (32, 42) réversible agencé entre lesdits premier et deuxième moteurs électriques (30, 40) de manière à transférer de la puissance électrique de manière réversible de l'un à l'autre.

5.  Dispositif d'entrainement (20) selon l'une des revendications 1 à 4, dans lequel le premier des trois éléments est le porte-satellites (52U) étant destiné à être accouplé au boîtier de relais d'accessoires (12), le deuxième desdits trois éléments est la couronne (52B) étant destiné à être accouplée à la génératrice (16), et le troisième desdits trois éléments est le planétaire (52A) étant destiné à être accouplé au premier moteur électrique (30), et dans lequel le deuxième desdits trois éléments est également couplé audit deuxième moteur électrique (40).

6.  Dispositif d'entrainement (20) selon l'une des revendications 1 à 4, dans lequel le premier des trois éléments est le porte-satellites (52U) étant destiné à être accouplé au boîtier de relais d'accessoires (12), le deuxième desdits trois éléments est la couronne (52B) étant destiné à être accouplée à la génératrice (16), et le troisième desdits trois éléments est le planétaire (52A) étant destiné à être accouplé au premier moteur électrique (30), et dans lequel le premier desdits trois éléments est également couplé audit deuxième moteur électrique (40).

7.  Dispositif d'entrainement (20) selon l'une des revendications 1 à 4, dans lequel le premier des trois éléments est la couronne (52B) étant destiné à être accouplée au boîtier de relais d'accessoires (12), le deuxième desdits trois éléments est le porte-satellites (52U) étant destiné à être accouplé à la génératrice (16), et le troisième desdits trois éléments est le planétaire (52A) étant destiné à être accouplé au premier moteur électrique (30), et dans lequel le deuxième desdits trois éléments est également couplé audit deuxième moteur électrique (40).

8.  Turbomachine (10), notamment d'aéronef, comportant :

    - un boîtier de relais d'accessoires (12) ayant un arbre de sortie (14),
    - une génératrice intégrée (16) ayant un arbre d'entrée (18),

et étant **caractérisée en ce qu'**elle comporte également un dispositif d'entrainement (20) selon l'une des revendications précédentes.

9. Procédé de régulation de la vitesse d'une génératrice intégrée (16) d'une turbomachine (10) selon la revendication 8 dans un aéronef, comprenant une étape de modification de la vitesse du troisième des trois éléments en pilotant le premier moteur électrique (30) au moyen des moyens de commande de manière à ce que le deuxième desdits trois éléments soit entraîné en rotation à une vitesse constante.

**Patentansprüche**

1. Antriebsvorrichtung (20) einer Eingangswelle (18) eines integrierten Generators (16) einer Turbomaschine (10) eines Luftfahrzeugs ausgehend von einer Ausgangswelle (14) eines Zubehör-Relaisgehäuses (12) der Turbomaschine (10), **dadurch gekennzeichnet, dass** die Antriebsvorrichtung (20) Folgendes umfasst:

   - einen ersten und einen zweiten Elektromotor (30, 40), die jeweils ein Motor-Generator sind,
   - Steuermittel, die dazu konfiguriert sind, den ersten und den zweiten Elektromotor (30, 40) zu steuern, wobei der erste und der zweite Elektromotor (30, 40) dazu eingerichtet sind, elektrische Leistung von dem einen zu dem anderen zu übertragen, und
   - ein epizyklisches Untersetzungsgetriebe (50), das drei Elemente umfasst, ein zentrale Planetengetriebe (52A), ein äußeres Hohlrad (52B) und einen Planetenträger (52U), dessen Planetenräder (52S) mit dem Planetengetriebe (52A) und dem Hohlrad (52B) eingreifen, wobei die drei Elemente um eine Achse des Getriebes (50) drehbeweglich sind, wobei ein erstes der drei Elemente dazu bestimmt ist, mit der Ausgangswelle (14) des Zubehör-Relaisgehäuses (12) gekoppelt zu sein, ein zweites der drei Elemente dazu bestimmt ist, mit der Eingangswelle (18) des Generators (16) gekoppelt zu sein, ein drittes der drei Elemente in Drehung von dem ersten Elektromotor (30) angetrieben ist,

   und wobei die Mittel zur Steuerung dazu konfiguriert sind, die Drehzahl des dritten der drei Elemente derart zu modifizieren, dass das zweite der drei Elemente in Drehung mit einer konstanten Drehzahl angetrieben wird.

2. Antriebsvorrichtung (20) nach dem vorstehenden Anspruch, wobei der erste Elektromotor (30) ein Motor/Generator ist, der mit einer Batterie ausgestattet ist.

3. Antriebsvorrichtung (20) nach einem der vorstehenden Ansprüche, wobei der erste und der zweite Elektromotor (30, 40) asynchron sind.

4. Antriebsvorrichtung (20) nach einem der vorstehenden Ansprüche, die mindestens einen umkehrbaren Leistungswandler (32, 42) umfasst, der zwischen dem ersten und dem zweiten Elektromotor (30, 40) derart eingerichtet ist, dass er elektrische Leistung umkehrbar von dem einen zu dem anderen überträgt.

5. Antriebsvorrichtung (20) nach einem der Ansprüche 1 bis 4, wobei das erste der drei Elemente der Planetenträger (52U) ist, der dazu bestimmt ist, an das Zubehör-Relaisgehäuse (12) gekoppelt zu sein, das zweite der drei Elemente der Kranz (52B) ist, der dazu bestimmt ist, an den Generator (16) gekoppelt zu sein, und das dritte der drei Elemente das Planetengetriebe (52A) ist, das dazu bestimmt ist, an den ersten Elektromotor (30) gekoppelt zu sein, und wobei das zweite der drei Elemente ebenfalls an den zweiten Elektromotor (40) gekoppelt ist.

6. Antriebsvorrichtung (20) nach einem der Ansprüche 1 bis 4, wobei das erste der drei Elemente der Planetenträger (52U) ist, der dazu bestimmt ist, an das Zubehör-Relaisgehäuse (12) gekoppelt zu sein, das zweite der drei Elemente der Kranz (52B) ist, der dazu bestimmt ist, an den Generator (16) gekoppelt zu sein, und das dritte der drei Elemente das Planetengetriebe (52A) ist, das dazu bestimmt ist, an den ersten Elektromotor (30) gekoppelt zu sein, und wobei das erste der drei Elemente ebenfalls an den zweiten Elektromotor (40) gekoppelt ist.

7. Antriebsvorrichtung (20) nach einem der Ansprüche 1 bis 4, wobei das erste der drei Elemente der Kranz (52B) ist, der dazu bestimmt ist, an das Zubehör-Relaisgehäuse (12) gekoppelt zu sein, das zweite der drei Elemente der Planetenträger (52U) ist, der dazu bestimmt ist, an den Generator (16) gekoppelt zu sein, und das dritte der drei Elemente das Planetengetriebe (52A) ist, das dazu bestimmt ist, an den ersten Elektromotor (30) gekoppelt zu sein, und wobei das zweite der drei Elemente ebenfalls an den zweiten Elektromotor (40) gekoppelt ist.

8.  Turbomaschine (10), insbesondere eines Luftfahrzeugs umfassend:

    - ein Zubehör-Relaisgehäuse (12), das eine Ausgangswelle (14) aufweist,
    - einen integrierten Generator (16), der eine Antriebswelle (18) aufweist,

    und **dadurch gekennzeichnet ist, dass** sie auch eine Antriebsvorrichtung (20) nach einem der vorstehenden Ansprüche umfasst.

9.  Drehzahlregulierungsverfahren eines integrierten Generators (16) einer Turbomaschine (10) nach Anspruch 8 in einem Luftfahrzeug, das einen Schritt zur Änderung der Drehzahl des dritten der drei Elemente durch Steuern des ersten Elektromotors (30) mittels der Mittel zur Steuerung derart umfasst, dass das zweite der drei Elemente in Drehung mit einer konstanten Geschwindigkeit angetrieben wird.

**Claims**

1.  A device (20) for driving an input shaft (18) of an integrated generator (16) of an aircraft turbomachine (10) from an output shaft (14) of an accessory gear box (12) of the turbomachine (10), **characterized in that** the driving device (20) comprises:

    - first and second electric motors (30, 40) each being a motor/generator,
    - control means configured to control said first and second electric motors (30, 40), said first and second electric motors (30, 40) being arranged to transfer electrical power from one to the other, and
    - an epicyclic reduction gear train (50) comprising three elements, a central planetary gear (52A), an external ring gear (52B) and a planet carrier (52U) whose planet gears (52S) mesh with said planetary gear (52A) and said ring gear (52B), said three elements being rotatable about an axis of the gearbox (50), a first one of said three elements being intended to be coupled to the output shaft (14) of the accessory gear box (12), a second one of said three elements being intended to be coupled to the input shaft (18) of the generator (16), a third one of said three elements being driven in rotation by said first electric motor (30),

    and wherein said control means are configured to change the rotational speed of the third of said three elements so that the second of said three elements is driven in rotation at a constant speed.

2.  The driving device (20) according to the preceding claim, wherein the first electric motor (30) is a motor/generator adapted to operate without power transfer with a second motor and to be equipped with a battery.

3.  The driving device (20) according to any of the preceding claims, wherein said first and second electric motors (30, 40) are asynchronous.

4.  The driving device (20) according to any of the preceding claims, comprising at least one reversible power converter (32, 42) arranged between said first and second electric motors (30, 40) so as to transfer electrical power reversibly from one to the other.

5.  The driving device (20) of any of claims 1 to 4, wherein the first of said three elements is the planet carrier (52U) being intended to be coupled to the accessory gear box (12), the second of said three elements is the ring gear (52B) being intended to be coupled to the generator (16), and the third of said three elements is the planetary gear (52A) being intended to be coupled to the first electric motor (30), and wherein the second of said three elements is also coupled to said second electric motor (40).

6.  The driving device (20) of any of claims 1 to 4, wherein the first of said three elements is the planet carrier (52U) being intended to be coupled to the accessory gear box (12), the second of said three elements is the ring gear (52B) being intended to be coupled to the generator (16), and the third of said three elements is the planetary gear (52A) being intended to be coupled to the first electric motor (30), and wherein the first of said three elements is also coupled to said second electric motor (40).

7.  The driving device (20) of any of claims 1 to 4, wherein the first of said three elements is the ring gear (52B) being intended to be coupled to the accessory gear box (12), the second of said three elements is the planet carrier (52U) being intended to be coupled to the generator (16), and the third of said three elements is the planetary gear (52A) being intended to be coupled to the first electric motor (30), and wherein the second of said three elements is also coupled to said second electric motor (40).

8. A turbomachine (10), in particular for an aircraft, comprising:

    - an accessory gear box (12) having an output shaft (14),
    - an integrated generator (16) having an input shaft (18),

and being **characterized in that** it also comprises a driving device (20) according to one of the preceding claims.

9. A method for regulating the speed of an integrated generator (16) of a turbomachine (10) according to claim 8 in an aircraft, comprising a step of modifying the speed of the third of the three elements by controlling the first electric motor (30) by means of control means so that the second of said three elements is driven in rotation at a constant speed.

Fig. 1

Fig. 2

Fig. 3

Fig. 4a

Fig. 4b

Fig. 4c

**RÉFÉRENCES CITÉES DANS LA DESCRIPTION**

**Documents brevets cités dans la description**

- FR 3062421 A1
- EP 2216530 A2
- EP 2216530 A3
- EP 2696058 A1